# EUROPÄISCHE PATENTSCHRIFT

(11) **EP 3 117 977 B1**
(45) Veröffentlichungstag und Bekanntmachung des Hinweises auf die Patenterteilung: **09.05.2018**
(21) Anmeldenummer: 16175591.3
(22) Anmeldetag: 21.06.2016
(51) Int. Cl.: B29C 45/26, B29C 45/27, B29C 45/28, B29C 33/30

(54) **WERKZEUGHÄLFTE FÜR EIN FORMWERKZEUG EINER SPRITZGIESSMASCHINE MIT EINEM HEISSKANALSYSTEM**
TOOL HALF FOR A MOULD OF AN INJECTION MOULDING MACHINE WITH A HOT RUNNER SYSTEM
MOITIE D'OUTIL POUR UN MOULE DE FORMAGE D'UNE MACHINE A MOULER PAR INJECTION COMPRENANT UN SYSTEME DE CANAUX CHAUFFANTS

(30) Priorität: 14.07.2015 DE 102015111415
(43) Veröffentlichungstag der Anmeldung: 18.01.2017
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- EP-A2- 1 025 974
- EP-A2- 1 714 769
- WO-A1-2007/014954
- WO-A1-2007/079951
- WO-A1-2012/173955
- DE-A1- 19 611 880
- JP-A- H05 318 533
- JP-A- 2001 170 977
- JP-U- S52 131 774
- US-A1- 2010 092 588

## Beschreibung

Die Erfindung betrifft eine Werkzeughälfte für ein Formwerkzeug einer Spritzgießmaschine mit einem Heißkanalsystem gemäß Anspruch 1. In einer Spritzgießmaschine mit einem Heißkanalsystem wird eine fließfähige Masse, beispielsweise ein Kunststoff, bei einer vorgegeben Temperatur unter definiertem Druck einem trennbaren Formeinsatz zugeführt, der in einem aus zwei Werkzeughälften bestehenden Formwerkzeug ausgebildet ist. In dem meist aus mehreren Formplatten und Kernen bestehenden Formeinsatz sind Kavitäten ausgebildet, die über Heißkanaldüsen mit der fließfähigen Masse befüllt werden. Jede Heißkanaldüse hat hierzu ein Materialrohr mit einem Strömungskanal, der in einem Düsenmundstück endet. Letzteres bildet endseitig eine Düsenaustrittsöffnung, die über eine Angussöffnung in die jeweilige Kavität mündet. Jede Heißkanaldüse ist ferner an einer Verteilerplatte montiert, in der - ausgehend von einem zentralen Einlass - Verteilerkanäle ausgebildet sind, die mit den Strömungskanälen in den Heißkanaldüsen in Verbindung stehen. Die in einer oder mehreren Werkzeugplatten montierten Heißkanaldüsen, der Verteiler sowie eine der Formplatten des Formeinsatzes bilden die sogenannte düsenseitige Werkzeughälfte des Formwerkzeugs, die mittels einer Aufspannplatte meist als vormontierte Baueinheit in dem Spritzgießwerkzeug montiert wird.

Um ein vorzeitiges Abkühlen der fließfähigen Masse innerhalb der Strömungskanäle und der Verteilerkanäle zu verhindern, sind die Heißkanaldüsen und die Verteilerplatte(n) mit elektrischen Heizvorrichtungen versehen. Dadurch kommt es zu keiner Erstarrung der fließfähigen Masse im Angusssystem und es verbleibt kein Anguss an dem in der Kavität ausgebildeten Bauteil. Bei der Verarbeitung von Duroplasten und Elastomeren, wo der Kunststoff unter Temperatureinfluss aushärtet, werden anstelle von Heißkanalsystemen entsprechend Kaltkanalsysteme eingesetzt. Wenn daher nachfolgend Heißkanalsysteme beschrieben werden, so sind damit - je nach Anwendung - sinngemäß stets auch Kaltkanalsysteme gemeint.

Zahlreiche Anwendungen verlangen den Einsatz von geschlossenen Heißkanalsystemen. In einem solchen System werden Heißkanaldüsen eingesetzt, welche die Düsenaustrittsöffnungen und/oder die Angussöffnungen periodisch verschließen. Dazu verwendet man beispielsweise axialverschieblich gelagerte Verschlussnadeln, die mittels eines Verschlussnadelantriebs pneumatisch, hydraulisch, elektrisch oder magnetisch betätigt werden.

Aus WO 2007 079 836 A1 ist es bekannt, sämtliche Verschlussnadeln einer düsenseitigen Werkzeughälfte synchron zu bewegen und mit gleicher Schließkraft zu beaufschlagen, was beispielsweise immer dann notwendig ist, wenn in einem Formwerkzeug mehrere Formeinsätze gleichzeitig angespritzt werden. Der Verschlussnadelantrieb hat hierzu ein Hubelement, an dem wenigstens eine Verschlussnadel einer Heißkanaldüse festlegbar ist und das zwischen zwei in einer ersten Richtung längsverschieblich gelagerten Steuerschienen und zwei feststehenden Anschlägen angeordnet ist. Zwischen dem Hubelement und den Steuerschienen sind - in zu der ersten Richtung und der zweiten Richtung schräg verlaufenden Nuten - wenigstens zwei Gleitelemente ausgebildet, die eine Bewegung der Steuerschienen entlang der ersten Richtung in eine Hubbewegung des Hubelements in der zweiten Richtung umsetzen. Die zu beiden Seiten des Hubelements liegenden Steuerschienen sind über ein gemeinsames Schubelement mit dem Antrieb verbunden und in die Aufspannplatte der düsenseitigen Werkzeughälfte eingelassen.

Das gesamte Formwerkzeug wird - je nach Anwendungszweck und je nach Ausgestaltung und Anzahl der Kavitäten - stets individuell gefertigt, d.h. jeder Formeinsatz, jede Formplatte oder jedes Werkzeug ist mit einer bestimmten Anzahl an Kavitäten versehen und in der düsenseitigen Werkzeughälfte ist eine entsprechende Anzahl von Heißkanaldüsen angeordnet. Für jede Heißkanaldüse ist zudem eine Verschlussnadel vorgesehen, die-je nach Anordnung der Kavitäten im Formeinsatz, in der Formplatte oder im Werkzeug - in einer definierten Position an dem Hubelement des Nadelantriebs montiert sind. Ein Verschlussnadelantrieb gemäß WO 2007 079 836 A1 ermöglicht es damit, innerhalb des Heißkanalsystems die unterschiedlichsten Stichmaße zu realisieren.
Wird das Formwerkzeug auf der Spritzgießmaschine gewechselt, was immer dann zu erfolgen hat, wenn andere Produkte oder Artikel hergestellt werden sollen, muss stets der gesamte düsenseitige Werkzeugeinsatz, einschließlich des Verschlussnadelantriebs ersetzt werden. Dies ist nicht nur mit erheblichen Kosten verbunden, auch Lagerhaltung und Logistik der verschiedenen Werkzeughälften sind aufwendig und teuer, insbesondere dann, wenn man verschiedene Werkzeughälften vorhalten muss, um rasch einen Produktwechsel durchführen zu können. Die WO 2007/014954 A1 beschreibt eine Werkzeughälfte, die aus zwei Baueinheiten besteht, die voneinander trennbar ausgebildet sind. Zur ersten Baueinheit gehören eine Aufspannplatte und Nadelantriebe mit je einem Kupplungselement. Zur zweiten Baueinheit gehören eine Werkzeugplatte, Verteilerkanäle und Heißkanaldüsen. Letztere weisen Verschlussnadeln auf, deren Kopfende ein Kupplungselement ausbildet. Durch ein Verschieben der ersten Baueinheit relativ zur zweiten Baueinheit quer zur Hubrichtung der Verschlussnadeln, lässt sich je ein Kupplungselement der Nadelantriebe mit genau einem Kupplungselement einer der Verschlussnadeln in Eingriff bringen. Die WO 2012/173955 A1 offenbart eine Werkzeughälfte, bei der eine Betätigungsplatte mit Verschlussnadeln verbunden ist. Die Betätigungsplatte ist zwischen einer Betätigungsplatte und einer Werkzeugplatte angeordnet und zwischen diesen in Richtung der Verschlussnadeln bewegbar.

Ziel der Erfindung ist es daher, diese und weitere Nachteile des Standes der Technik zu überwinden und eine Werkzeughälfte für ein Formwerkzeug einer Spritzgießmaschine mit einem geschlossenen Heißkanalsystem zu schaffen, die mit einfachen Mitteln kostengünstig aufgebaut und leicht zu handhaben ist. Die Werkzeughälfte soll insbesondere einen raschen und unkomplizierten Tausch des düsenseitigen Formeinsatzes und der zugehörigen Heißkanaldüsen-Anordnung ermöglichen, ohne dass aufwendige Montagearbeiten notwendig sind und ohne einen vollständigen Wechsel des gesamten Verschlussnadelantriebs durchführen zu müssen.

Hauptmerkmale der Erfindung sind in Anspruch 1 angegeben. Ausgestaltungen sind Gegenstand der Ansprüche 2 bis 11. Bei einer Werkzeughälfte nach Anspruch 1 ist es nicht mehr notwendig, bei einem anstehenden Wechsel des Formwerkzeugs auf einer Spritzgießmaschine, die gesamte düsenseitige Werkzeughälfte auszutauschen. Vielmehr ist es möglich, die erste und meist teure Baueinheit mit dem Verschlussnadelantrieb in der Spritzgießmaschine zu belassen und lediglich die zweite Baueinheit der Werkzeughälfte mit den darin verbauten Komponenten als Teil-Werkzeug auszutauschen.
Ein wesentlicher Vorteil dieser Erfindung gegenüber herkömmlichen Konstruktionen besteht mithin darin, dass nicht mehr die düsenseitige Werkzeughälfte des Formwerkzeugs mitsamt dem Antrieb und der Aufspannplatte ausgetauscht werden muss, sondern nur noch ein Teil des Werkzeugs. Der Antrieb für die Verschlussnadeln der Heißkanaldüsen kann mit all seinen Komponenten und Anschlüssen in der Spritzgießmaschine verbleiben und es wird nur die zweite Baueinheit als kompaktes Teil-Werkzeug gewechselt. An der ersten Baueinheit lassen sich zudem die unterschiedlichsten Teil-Werkzeuge montieren, wobei jede zweite Baueinheit die unterschiedlichsten Formplatten und Geometrien aufweisen und mit den dafür notwendigen Komponenten versehen sein kann.
Die Erfindung sieht weiter vor, dass die Baueinheiten derart ausgebildet sind, dass bei einem Ausbau der zweiten Baueinheit aus der Spritzgießmaschine die erste Baueinheit in der Spritzgießmaschine verbleibt, und dass - bei einem Einbau eines anderen Teil-Werkzeugs - nach dem Verbinden der zweiten Baueinheit mit der ersten Baueinheit jede Verschlussnadel mit dem Verschlussnadelantrieb in Wirkverbindung steht. Zwischen der ersten und der zweiten Baueinheit ist eine Trennebene ausgebildet, die jederzeit eine rasche und einfache Trennung der Düsenkomponente mit den Verschlussnadeln von der Antriebskomponente ermöglicht, ohne dass es notwendig ist, die düsenseitige Werkzeughälfte innerhalb der Spritzgießmaschine in Einzelteilen zu zerlegen.

Damit ist sichergestellt, dass der Wechsel der zweiten Baueinheit als Teil-Werkzeughälfte jederzeit rasch und bequem erfolgen kann und dass die Verschlussnadeln innerhalb der zweiten Baueinheit nach der Montage stets zuverlässig von dem Verschlussnadelantrieb der ersten Baueinheit betätigt werden, so dass die Fertigung der gewünschten Produkte ohne zeit- und arbeitsaufwendige Unterbrechungen fortgesetzt werden kann.

Um eine stets zuverlässige mechanische Verbindung zwischen der ersten Baueinheit und der zweiten Baueinheit zu gewährleisten, ist die Werkzeugplatte der zweiten Baueinheit mittels Befestigungselementen lösbar an der Aufspannplatte und/oder einer Deckplatte der ersten Baueinheit festlegbar. Als Befestigungselemente können Schrauben verwendet werden, aber auch Schnellspannelemente, welche die Baueinheiten fest miteinander verbinden.

Für eine zuverlässige funktionale Verbindung zwischen den Baueinheiten der Werkzeughälfte ist vorgesehen, dass jede Verschlussnadel der zweiten Baueinheit mittels einer Kupplungseinrichtung lösbar mit dem Verschlussnadelantrieb der ersten Baueinheit verbindbar ist. Damit sind die beiden Baueinheiten nicht nur mechanisch fest miteinander verbunden. Die Kupplungseinrichtung sorgt zudem dafür, dass die Verschlussnadeln der zweiten Baueinheit nach jedem Werkzeugwechsel mit dem Antrieb in der ersten Baueinheit in Wirkverbindung stehen, so dass die Kavitäten stets zuverlässig und präzise geöffnet und geschlossen werden.

Hierbei sieht die Erfindung weiter vor, dass die Kupplungseinrichtung ein erstes Kupplungselement aufweist, das der ersten Baueinheit zugeordnet ist, und dass die Kupplungseinrichtung ein zweites Kupplungselement aufweist, das der zweiten Baueinheit zugeordnet ist, wobei das erste Kupplungselement und das zweite Kupplungselement lösbar miteinander verbindbar sind. Die Kupplungselemente sorgen damit für die Anbindung der Verschlussnadeln an den Verschlussnadelantrieb. Ein weiterer wesentlicher Vorteil der erfindungsgemäßen Lösung besteht jedoch darin, dass die Ausbildung und Anordnung der Kupplungselemente unabhängig von der Anordnung und Ausbildung der Verschlussnadeln erfolgen kann, so dass unterschiedliche zweite Baueinheiten, mit beispielsweise unterschiedlichen Stichmaßen und/oder Düsenanordnungen, an ein und dieselbe erste Baueinheit angeschlossen werden können. Der Verschlussnadelantrieb, der bei einem Werkzeugwechsel stets im Spritzgießwerkzeug verbleibt, muss - ebenso wie das zugehörige Steuergerät und der Servomotor - nur einmal angeschafft werden, was sich insgesamt günstig auf die Werkzeugkosten auswirkt. Ferner vereinfachen sich Lagerhaltung und Logistik, weil nur die Werkzeugplatten mit den darin verbauten Komponenten ausgetauscht werden. Diese können individuell konzipiert und platzsparend gelagert werden.

Konstruktiv ist es günstig, wenn das erste Kupplungselement fest mit einem Stellglied des Verschlussnadelantriebs verbunden ist, wobei das erste Kupplungselement bevorzugt ein Bolzen ist, der sich in Längsrichtung der Verschlussnadeln erstreckt, und der die Deckplatte der ersten Baueinheit längsverschieblich durchragt. Hierdurch wird der Bolzen stets sicher geführt, was sich günstig auf die Zuverlässigkeit des Werkzeugs auswirkt.

In einer weiteren Ausführungsform der Erfindung ist vorgesehen, dass das erste Kupplungselement vorgelagert zur Deckplatte ein Aufspannelement trägt. Auch dieses Element kann direkt oder indirekt mit dem zweiten Kupplungselement der zweiten Baueinheit verbunden werden, um die Anbindung der Verschlussnadeln an den Verschlussnadelantrieb zu realisieren.

In einer noch anderen Bauform der Erfindung ist das Stellglied des Verschlussnadelantriebs ein erstes Hubelement, das zur Betätigung der Verschlussnadeln in deren Längsrichtung Stellbewegungen ausführt, um die Verschlussnadeln in die Öffnungsstellung und in die Schließstellung zu bringen. Dabei ist es günstig, wenn das Stellglied zwischen der Aufspannplatte und der Deckplatte angeordnet ist, was eine insgesamt kompakte Bauform für die erste Baueinheit ergibt. Ferner kann das Stellglied direkt oder indirekt mit einem Motor des Verschlussnadelantriebs verbunden sein.

Das zweite Kupplungselement ist bevorzugt ein zweites Hubelement, an dem die wenigstens eine Verschlussnadel festgelegt ist. Damit lassen sich bei Bedarf auch mehrere Verschlussnadeln gleichzeitig und präzise betätigen und/oder mit gleicher Schließkraft beaufschlagen. Durch das separat ausgebildete, zweite Hubelement können zudem die Heißkanaldüsen und die Verschlussnadeln - und folglich die Kavitäten in den Formplatten - nahezu beliebig angeordnet werden, insbesondere dann, wenn das zweite Hubelemente eine Platte ist. Die Anzahl, die Anordnung, die Größe und die Geometrie der Kavitäten können damit innerhalb der Formplatten nahezu frei gewählt werden. Der Verschlussnadelantrieb selbst kann auf einem beliebigen Antriebskonzept basieren, beispielsweise mit einem elektrischen, magnetischen pneumatischen oder hydraulischen Motor. Über die Kupplungseinrichtung wird dieser mit dem zweiten Hubelement und damit mit den Verschlussnadeln verbunden, so dass diese präzise und simultan betätigt werden können. Bei der Verwendung eines elektrischen Antriebs lassen sich zudem die Verschlussnadeln präzise in verschiedenen Positionen zwischen einer Schließstellung und einer maximalen Öffnungsstellung positionieren. Möglich ist in diesem Fall auch die Realisierung von unterschiedlichen Geschwindigkeiten bzw. Geschwindigkeitsprofilen, mit denen die Verschlussnadeln zwischen der Schließstellung und der Öffnungsstellung bewegt werden.
Für eine kompakte und robuste Bauform ist es günstig, wenn das zweite Hubelement innerhalb der zweiten Baueinheit und in Längsrichtung der Verschlussnadeln verschieblich gelagert ist. Dies kann beispielsweise über seitliche Schienen erfolgen oder über Führungsbolzen, welche in der zweiten Baueinheit fest angeordnet sind und das Hubelement durchragen.
Um eine rasche und einfach zu handhabende Anbindung der zweiten Baueinheit an die erste Baueinheit zu gewährleisten, sieht die Erfindung weiter vor, dass das zweite Hubelement an dem Bolzen und/oder dem Aufspannelement festlegbar ist.
Von Vorteil ist ferner, wenn die Verschlussnadeln in deren Längsrichtung und/oder quer dazu relativ zu dem zweiten Hubelement justierbar sind, so dass die Positionen jeder einzelnen Verschlussnadel bei Bedarf individuell verändert werden kann. Dazu trägt auch bei, wenn die Verschlussnadeln axialfest und radial schwimmend an dem zweiten Hubelement montiert sind. Erfindungsgemäß ist zwischen dem ersten Kupplungselement und dem zweiten Kupplungselement eine Riegelvorrichtung und/oder eine Schnellspannvorrichtung ausgebildet ist. Damit lassen sich die Baueinheiten jederzeit rasch miteinander verbinden, aber auch ebenso rasch wieder voneinander lösen, um beispielsweise eine andere zweite Baueinheit einzusetzen, die eine andere Anordnung der Heißkanaldüsen oder andere Stichmaße aufweist. Diese zweite Baueinheit wird einfach als neues Teil-Werkzeug der düsenseitigen Werkzeughälfte an der ersten Baueinheit angesetzt und mit den Befestigungselementen daran befestigt. Danach wird das zweite Kupplungselement mittels der Riegelvorrichtung oder der Schnellspannvorrichtung mit dem ersten Kupplungselement der ersten Baueinheit und folglich mit dem Antrieb gekoppelt, so dass die an dem zweiten Hubelement montierten Verschlussnadeln von der Öffnungsstellung in die Schließstellung gebracht werden können und umgekehrt.
Vorteilhaft kann die Riegelvorrichtung in dem zweiten Kupplungselement ausgebildet sein, was sich weiter günstig auf die Gesamtabmessungen der zweiten Baueinheit auswirkt.

Die Schnellspannvorrichtung kann im Querschnitt L-förmige Klemmelemente aufweisen, mit denen sich beispielsweise zwei plattenförmige Kuppelelemente rasch und zuverlässig miteinander verbinden lassen.

Auch die zwischen den Baueinheiten, namentlich zwischen der Werkzeugplatte der zweiten Baueinheit und der Aufspannplatte und/oder der Deckplatte der ersten Baueinheit vorgesehenen Befestigungselemente, können eine Schnellspannvorrichtung bilden oder Teile davon sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Seitenansicht einer erfindungsgemäßen Werkzeughälfte mit einer ersten Baueinheit und einer zweiten Baueinheit, die einsatzbereit miteinander verbunden sind;
- Fig. 2: eine Schrägansicht der zweiten Baueinheit der Werkzeughälfte von Fig. 1 mit einer Riegelvorrichtung in verriegelter Position;
- Fig. 3: eine Schrägansicht der zweiten Baueinheit der Werkzeughälfte von Fig. 1 mit der Riegelvorrichtung in entriegelter Position;
- Fig. 4: eine schematische Schnittansicht der erfindungsgemäßen Werkzeughälfte von Fig. 1;
- Fig. 5: eine schematische Seitenansicht einer anderen Ausführungsform einer erfindungsgemäßen Werkzeughälfte mit einer ersten Baueinheit und einer zweiten Baueinheit, die einsatzbereit miteinander verbunden sind;
- Fig. 6: eine schematische Schrägansicht einer noch anderen Ausführungsform einer erfindungsgemäßen Werkzeughälfte mit einer ersten Baueinheit und einer zweiten Baueinheit, die einsatzbereit miteinander verbunden sind;
- Fig. 7: eine weitere Schrägansicht der erfindungsgemäßen Werkzeughälfte von Fig. 6.

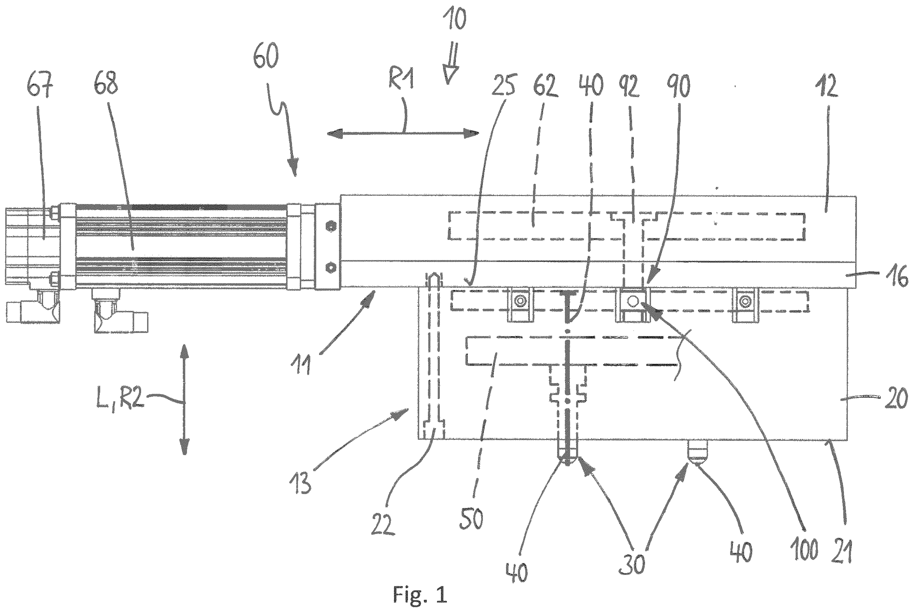

Die in Fig. 1 allgemein mit 10 bezeichnete Werkzeughälfte ist Teil eines (nicht weiter dargestellten) Formwerkzeugs, das für den Einsatz in einer (gleichfalls nicht gezeigten) Spritzgießmaschine vorgesehen ist. Sie bildet die sogenannte heiße Seite in einem geschlossenen Heißkanalsystem und hat hierzu im Wesentlichen eine Aufspannplatte 12 zur Festlegung der Werkzeughälfte 10 in der Spritzgießmaschine, mehrere Heißkanaldüsen 30, die an einem Verteiler 50 angeschlossen sind, sowie eine Werkzeugplatte 20, die mit diversen (nicht näher bezeichneten) Ausnehmungen zur Aufnahme der Werkzeugkomponenten versehen ist. Die Werkzeugplatte 20, die nicht - wie in Fig. 1 dargestellt - zwingend einteilig ausgebildet sein muss, trägt an ihrer den freien Enden der Heißkanaldüsen 30 zugewandten Frontfläche 21 eine (nicht dargestellte) Formplatte eines Formeinsatzes, in dem (gleichfalls nicht sichtbare) Kavitäten ausgebildet sind, wobei jeder Kavität wenigstens eine Heißkanaldüse 30 zugeordnet ist. Die Heißkanaldüsen 30 und der Verteiler 50 sind mit geeigneten (nicht gezeigten) Heizvorrichtungen versehen, um ein vorzeitiges Abkühlen der fließfähigen Masse innerhalb der (ebenfalls nicht sichtbaren) Düsenkanäle und Verteilerkanäle zu verhindern.

Für das Öffnen und Schließen der endseitig in den Heißkanaldüsen 30 ausgebildeten Düsenaustrittsöffnungen und der jeweils zugehörigen Angussöffnungen im Formeinsatz ist jede Heißkanaldüse 30 mit einer Verschlussnadel 40 versehen, die sich allesamt parallel in einer Längsrichtung L erstrecken. Sie werden von einem Verschlussnadelantrieb 60 betätigt, der in oder an der Aufspannplatte 12 ausgebildet ist.

Die Verschlussnadeln 40 werden bevorzugt über ein Stellglied 62 des Verschlussnadelantriebs 60 betätigt, das von einem beispielsweise seitlich an der Aufspannplatte 12 montierten Motor 67 angetrieben wird. Das Stellglied 62 bewegt sich hierbei in einer zweiten Richtung R2, die senkrecht zu einer ersten Richtung R1 und parallel zur Längsrichtung L verläuft, so dass die Verschlussnadeln 40 zu Beginn eines Spritzgießzyklus von einer Schließstellung in eine Öffnungsstellung gebracht werden können. In der Schließstellung sind die Angussöffnungen der Kavitäten und die Düsenaustrittsöffnungen der Heißkanaldüsen 30 verschlossen, während in der Öffnungsstellung die zu verarbeitende fließfähige Masse durch die Verteilerkanäle, die Düsenkanäle und die Angussöffnungen hindurch in die Kavitäten des Formeinsatzes gelangt. Zum Beenden eines Spritzgießzyklus werden die Verschlussnadeln 40 mit dem Stellglied 62 von der Öffnungsstellung wieder in die Schießstellung verbracht. Der Verschlussnadelantrieb 60 hat einen Motor 67, der elektrisch, magnetisch, hydraulisch oder pneumatisch ausgebildet sein kann. Die notwendige Kraftübertragung erfolgt über ein Getriebe 68. Der Motor 67 wird über ein (nicht dargestelltes) elektrisches oder elektronisches Steuergerät gesteuert.

Die Verschlussnadeln 40 sind - wie die schematische Darstellung in Fig. 1 weiter zeigt - nicht direkt an dem Stellglied 62 des Verschlussnadelantriebs 60 befestigt, sondern an einem separaten Hubelement 94, das als Kupplungselement innerhalb der Werkzeugplatte 20 angeordnet ist. Dieses Kupplungselement 94 ist als zweites Kupplungselement über ein erstes Kupplungselement 92 mit dem Stellglied 62 des Verschlussnadelantriebs 60 verbindbar, so dass die Stellbewegungen des Stellglieds 62 über die Kupplungselemente 92, 94 auf die Verschlussnadeln 40 übertragen werden. Die Kupplungselemente 92, 94 bilden mithin eine Kupplungseinrichtung 90, mittels der die Verschlussnadeln 40 lösbar mit dem Verschlussnadelantrieb 60 verbindbar sind. Das erste Kupplungselement 92 ist hierbei fest mit dem Stellglied 62 verbunden, das bevorzugt ein erstes Hubelement bildet. Das zweite Kupplungselement 94 bildet ein zweites Hubelement, das innerhalb der Werkzeugplatte 20 in Längsrichtung L der Verschlussnadeln 40 verschieblich gelagert ist und das mittels einer Riegelvorrichtung 100 lösbar mit dem ersten Kupplungselement 92 verbindbar ist.

Wie die schematische Darstellung in Fig. 1 weiter zeigt, trägt die Aufspannplatte 12 eine Deckplatte 16, die mittels nicht gezeigter Schrauben fest mit der Aufspannplatte 12 verbunden ist. Die Werkzeugplatte 20 hingegen ist mittels Befestigungselementen 22 lösbar an der Deckplatte 16 der ersten Baueinheit 11 festlegbar ist. Die Befestigungselemente 22 sind bevorzugt Schraubbolzen, die in regelmäßigen Abständen randseitig die Werkzeugplatte 20 durchragen.

Um die Investitionskosten für mehrere, meist verschiedene Werkzeughälften 10 zu reduzieren und um den Ein- und Ausbau der Werkzeughälften 10 in der Spritzgießmaschine zu vereinfachen, ist erfindungsgemäß vorgesehen, dass die Aufspannplatte 12 und der Verschlussnadelantrieb 60 eine erste Baueinheit 11 bilden, die - gemeinsam mit dem zugehörigen Steuergerät, den notwendigen Anschlüssen und Kabeln sowie der zugehörigen Deckplatte 16 - fest in der Spritzgießmaschine montiert wird und auch bei einem Werkzeugwechsel in der Spritzgießmaschine verbleibt. Die Werkzeugplatte 20, die wenigstens eine Heißkanaldüse 30, die zugehörigen Verschlussnadeln 40 und der Verteiler 50 hingegen bilden eine zweite Baueinheit 13, die lösbar mit der ersten Baueinheit 11 verbindbar ist.

Für die lösbare Verbindung zwischen den Baueinheiten 11, 13 werden sowohl die Befestigungselemente 22 verwendet, welche die Werkzeugplatte 20 mit der Aufspannplatte 12 und/oder der Deckplatte 16 verbindet, als auch die Kupplungseinrichtung 90, welche die an dem zweiten Hubelement 94 festgelegten Verschlussnadeln 40 mit dem Stellglied 62 des Verschlussnadelantriebs 60 koppelt, so dass dieser die Verschlussnadeln 40 betätigen kann. Wichtig hierbei ist, dass das erste Kupplungselement 92 der ersten Baueinheit 11 und das zweite Kupplungselement 94 der zweiten Baueinheit 13 zugeordnet ist, so dass die zweite Baueinheit 13 jederzeit von der zweiten Baueinheit 11 abgenommen und auch wieder daran befestigt werden kann. Zwischen der ersten Baueinheit 11 und der zweiten Baueinheit 13 ist damit eine Trennebene T ausgebildet, wobei die beiden Baueinheiten 11, 13 dabei derart ausgebildet sind, dass bei einem Ausbau der zweiten Baueinheit 13 aus der Spritzgießmaschine die erste Baueinheit 11 in der Spritzgießmaschine verbleibt, und dass nach dem Verbinden der zweiten Baueinheit 13 mit der ersten Baueinheit 11 - namentlich nach dem Festlegen der Werkzeugplatte 20 an der Aufspannplatte 12 bzw. an der Deckplatte 16 und dem Verbinden der Kupplungselemente 92, 94 untereinander-jede Verschlussnadel 40 mit dem Verschlussnadelantrieb 60 in Wirkverbindung steht.

Eine solche Ausbildung einer Werkzeughälfte 10 hat den Vorteil, dass die gesamte Antriebstechnik für die Verschlussnadeln 40 als erste Baueinheit 11 stets in dem Spritzgießwerkzeug verbleiben kann, während die Anordnung und Ausbildung der Heißkanaldüsen 30 und der zugehörigen Verschlussnadeln 40 unabhängig davon innerhalb der zweiten Baueinheit 13 nahezu frei gestaltet werden kann. Der Verschlussnadelantrieb 60 muss damit nur einmal angeschafft werden. Für einen Werkzeugwechsel muss nur eine andere zweite Baueinheit 13 zur Verfügung gestellt werden, was sich äußerst günstig auf Lagerhaltung und Logistik auswirkt. Ferner ist die Montage und Demontage der zweiten Baueinheit 13 deutlich einfacher als die Montage und Demontage der gesamten Werkzeughälfte 10.

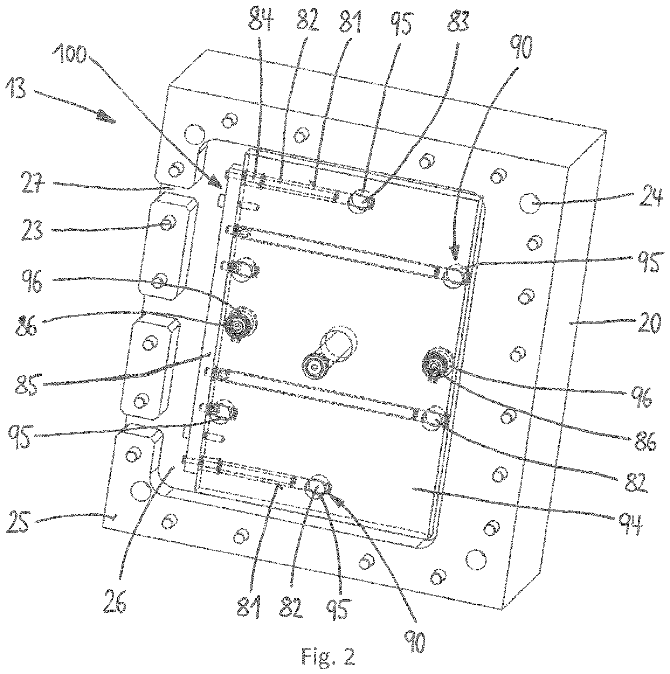

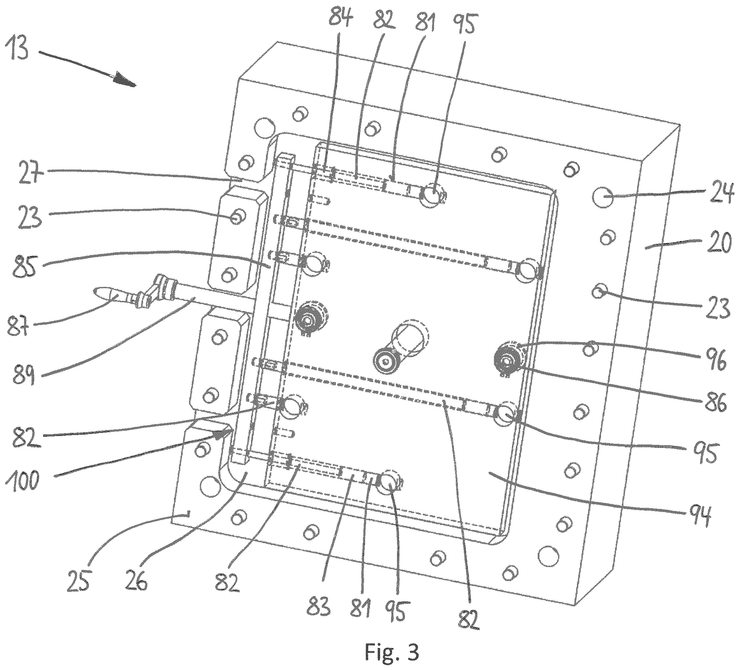

Die Fig. 2 und 3 zeigen eine mögliche Ausgestaltung der zweiten Baueinheit 13 der erfindungsgemäßen Werkzeughälfte 10.

Die Werkzeugplatte 20 ist randseitig mit mehreren Durchgangsbohrungen 23 versehen. In diese werden die Befestigungselemente 22 eingesetzt, um die zweite Baueinheit 13 an der ersten Baueinheit 11 zu befestigen. Zusätzliche Bohrungen 24 dienen der Zentrierung der Werkzeugplatte 20 gegenüber der ersten Baueinheit 11, insbesondere gegenüber der Aufspannplatte 12 und der Deckplatte 16, die mit entsprechenden (nicht gezeigten) Zentrierbolzen versehen sind. In der Werkzeugplatte 20 sind ferner die Heißkanaldüsen 30 montiert, die an den Verteiler 50 angeschlossen sind. Die Heißkanaldüsen ragen -wie in Fig. 1 angedeutet - mit ihren freien Enden über die (hier nicht sichtbare) Frontfläche 21 der Werkzeugplatte 20 hinaus bis in die Formplatte hinein und an die Kavitäten heran.

In der Rückseite 25 der Werkzeugplatte 20, mit der diese an der Deckplatte 16 zum Anliegen kommt, ist eine Ausnehmung 26 ausgebildet. In dieser sitzt das zweite Kupplungselement 94 der Kupplungseinrichtung 90, das vorliegend als zweites Hubelement in Form einer flachen Platte ausgebildet ist. Diese Platte 94 hat - bevorzugt in den Randbereichen - mehrere Durchgangsöffnungen 95 für die Aufnahme der ersten Kupplungselemente 92 der ersten Baueinheit 11. Weitere, seitlich in der Platte 94 vorgesehene Durchgangsbohrungen 96 nehmen mit definiertem Bewegungsspiel zwei Führungsbolzen 86 auf, die innerhalb der Werkzeugplatte 20 ausgebildet sind. Die Führungsbolzen 86 sorgen dafür, dass sich die Platte 94 innerhalb der Ausnehmung 26 und damit innerhalb der Werkzeugplatte 20 in Längsrichtung L auf und ab bewegen kann, ohne dabei zu verkanten und ohne die in dem Verteiler 50 und den Heißkanaldüsen 30 abgedichtet geführten Verschlussnadeln 40 zu belasten. Die Platte 94 ist vorzugsweise auf den Führungsbolzen 86 gesichert, beispielsweise mittels (nicht bezeichneter) Sprengringe. Diese können bei Bedarf zugleich einen Anschlag für die Hubbewegung der Platte 94 bilden.

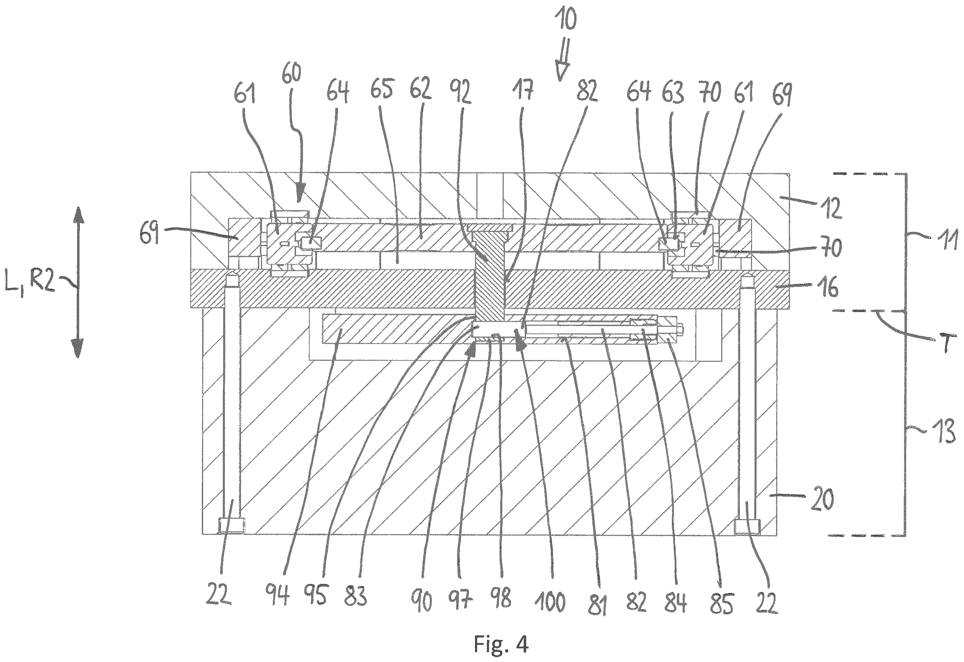

In der ersten Baueinheit 11 ist - wie Fig. 4 näher zeigt - der Verschlussnadelantrieb 60 ausgebildet. Dessen Stellglied 62 ist als erstes Hubelement gleichfalls als flache Platte ausgebildet, die parallel zwischen der Aufspannplatte 12 und der Deckplatte 16 liegt. Die Platte 62 ist ferner längsseits zwischen zwei in der ersten Richtung R1 längsverschieblich gelagerten Steuerschienen 61 angeordnet sowie zwischen zwei ortsfesten Anschlägen 65, die innerhalb der Aufspannplatte 12 fixiert sind. Sie trägt ferner seitlich mindestens zwei Gleitelemente 64, die in den Steuerschienen 61 parallel gleitgeführt sind. Letztere sind dabei an ihren der Platte 62 zugewandten Seitenflächen mit je zwei schräg zur Aufspannplatte 12 verlaufenden Nuten 63 versehen, welche die Gleitelemente 64 bis auf ein definiertes Bewegungsspiel aufnehmen. Die Steuerschienen 61 selbst bewegen sich innerhalb der Aufspannplatte 12, die hierzu mit einer nicht näher bezeichneten Ausnehmung versehen ist, zwischen zwei ortsfesten Führungsschienen 69. Sie sind über ein gemeinsames (nicht dargestelltes) Schubelement mit dem Motor 67 und dessen Getriebe 68 verbunden. Letzteres ist beispielsweise mittels Schrauben außen an der Aufspannplatte 12 und der Deckplatte 16 befestigt.

Die Steuerschienen 61 und das Schubelement bilden gemeinsam einen U-förmigen Rahmen, der die Platte 62 mit geringem Bewegungsspiel seitlich umfasst und der außen zwischen den

Führungsschienen 69 gleitgeführt ist. Bewegt der Motor 67 den Rahmen in der ersten Richtung R1 periodisch hin- und her, wird die zwischen den Anschlägen 65 zwangsgeführte Platte 62 von den in den Schrägnuten 63 der Steuerschienen 61 geführten Gleitelementen 64 in der zweiten Richtung R2 senkrecht zur Richtung R1 auf und ab bewegt. Die Platte 62 führt mithin eine Hubbewegung aus. Um die Steuerschienen 61 herum können weitere Gleitelemente 70 ausgebildet sein, um die während der Stellbewegung entstehende Reibung zu vermindern. Die Gleitelemente 70 können bei Bedarf in die Aufspannplatte 12 und die Deckplatte 16 eingelassen sein. Weitere Einzelheiten in Bezug auf einen solchen Verschlussnadelantrieb 60 sind der Internationalen Anmeldung WO 2007 079 836 A1 zu entnehmen, auf deren Inhalt hiermit vollinhaltlich Bezug genommen wird.

An der Platte 62 sind vorzugsweise mehrere der ersten Kupplungselemente 92 fixiert, namentlich entsprechend der Anzahl und der Position der Durchgangsöffnungen 95 in dem zweiten Kupplungselement - der Platte 94. Die ersten Kupplungselemente 92 sind bevorzugt Bolzen mit kreisrundem Querschnitt, deren Außendurchmesser bis auf ein geringes Bewegungsspiel dem Innendurchmesser der Durchgangsöffnungen 95 entspricht. Man erkennt ferner in Fig. 4, dass sich die Bolzen 92 in Längsrichtung L der Verschlussnadeln 40 erstrecken und die Deckplatte 16 der ersten Baueinheit 11 längsverschieblich durchragen. Diese ist hierzu mit entsprechenden Führungsbohrungen 17 versehen. Wichtig hierbei ist, dass die Bolzen 92 in jeder Position der Platte 62 entlang der Längsrichtung L mit ihren freien Enden 97 soweit über die Deckplatte 16 hinausragen, dass sie nach der Montage der zweiten Baueinheit 13 an der ersten Baueinheit 11 zuverlässig in die Durchgangsbohrungen 95 des zweiten Kupplungselements - der Platte 94 - eingreifen.

Setzt man die zweite Baueinheit 13 - beispielsweise bei einem Werkzeugwechsel - an die erste Baueinheit 11 an, legt sich die Werkzeugplatte 20 zunächst mit ihrer Rückseite 25 flach an die Deckplatte 16 an. Gleichzeitig greifen die Bolzen 92 der Platte 62 mit ihren freien Enden 97 in die Durchgangsöffnungen 95 der Platte 94 ein. Die Befestigungselemente 22 können nun mit der Deckplatte 16 verschraubt werden. Anschließend werden die Bolzen 92 mit der Platte 94 verbunden, d.h. die Kupplungselemente 92, 94 der Kupplungseinrichtung 90 werden miteinander gekuppelt bzw. aneinander fixiert. Hierzu verwendet man entweder die zwischen den Kupplungselementen 92, 94 ausgebildete Riegelvorrichtung 100 oder eine andere Verbindung, beispielsweise eine Schnellspannvorrichtung 110.

Eine mögliche Ausführungsform einer Riegelvorrichtung 100 ist beispielhaft in den Fig. 2 bis 4 dargestellt. Hierbei sind die Bolzen 92 an ihren freien Enden 97 mit Aufnahmebohrungen 98 versehen. In der Platte 94 sind, quer zu den (Kupplungs-)Bolzen 92 und quer zur Längsrichtung L Verriegelungsbolzen 82 ausgebildet, die längsverschieblich in Bohrungen 81 liegen und die - wie Fig. 4 näher zeigt - mit ihren freien Enden 83 in verriegelter Stellung der Riegelvorrichtung 100 in die Aufnahmebohrungen 98 der (Kupplungs-)Bolzen 92 eingreifen.

Fig. 2 zeigt die Verriegelungsbolzen 82 in der Verriegelungsposition. In dieser Stellung ragen die Verriegelungsbolzen 82 mit ihren freien Enden 83 in die Durchgangsöffnungen 95 der Platte 94 hinein. Liegen daher die (Kupplungs-)Bolzen 92 nach dem Ansetzen der zweiten Baueinheit 13 an die erste Baueinheit 11 in den Durchgangsöffnungen 95 der Platte 94, so können sich die freien Enden 83 der Verriegelungsbolzen 82 in die Aufnahmebohrungen 98 der Bolzen 92 einschieben. Die Kupplungselemente 92, 94 der Kupplungseinrichtung 90 werden fest aber lösbar miteinander verbunden und die Verschlussnadel 40 sind über die Platte 94 (zweites Kupplungselement und zweites Hubelement), die Bolzen 92 (erstes Kupplungselement) und das Stellglied 62 (erstes Hubelement) mit dem Verschlussnadel antrieb 60 gekoppelt, insbesondere wirksam verbunden.

Fig. 3 zeigt die Riegelvorrichtung 100 in der geöffneten Stellung, d.h. die Verriegelungsbolzen 82 sind aus den Durchgangsöffnungen 95 der Platte 94 vollständig zurückgezogen. Die freien Enden 83 der Verriegelungsbolzen 82 geben die (Kupplungs-)Bolzen 92 frei und diese können aus den Durchgangsöffnungen 95 der Platte 94 herausgezogen werden. Die zweite Baueinheit 13 kann mithin - nach dem Lösen der Befestigungselemente 22 - von der ersten Baueinheit 11 bequem abgenommen werden und ebenso rasch wieder montiert werden.

Für die Betätigung der innerhalb der Platte 94 ausgebildeten Verriegelungsbolzen 82 sind die den freien Enden 83 gegenüberliegenden Enden 84 der Verriegelungsbolzen 82 an einer Leiste 85 festgelegt, so dass die Verriegelungsbolzen 82 über die Leiste 85 gleichzeitig betätigt werden können.

Eine weitere Möglichkeit zeigt Fig. 3, indem an der Leiste 85 eine Handhabe 87 in Form eines Schraubendrehers oder einer Handkurbel angesetzt wird, über die man die Leiste 85 bewegen kann. Hierzu ist in der Leiste 85 beispielsweise eine (nicht gezeigte) Gewindebohrung eingebracht und der Schaft 89 der Leier 87 ist mit einem entsprechenden Gewinde versehen.

Dreht man den Schaft 89 der Handkurbel 87, wird die Leiste 85 mit den Verriegelungsbolzen 82 bewegt und die Kupplungseinrichtung 90 kann geschlossen oder geöffnet werden.

Eine weitere Alternative ist in Fig. 4 gezeigt. Hier sind die Verriegelungsbolzen 82 an ihren Enden 84 mit einem (nicht bezeichneten) Außengewinde versehen, das in einer Gewindebuchse 88 sitzt, die drehfest in der Platte 94 angeordnet ist. Dreht man die Verriegelungsbolzen 82, beispielsweise mittels eines Schraubendrehers oder einer Handkurbel 87, lassen sich die Verriegelungsbolzen 82 betätigen und die Kupplungselemente 92, 94 miteinander verbinden oder voneinander lösen. Für den Zugang zur Leiste 85 und/oder den Verriegelungsbolzen 88 sind in der Werkzeugplatte seitlich Öffnungen 27 vorgesehen.

In einer anderen Ausführungsform einer erfindungsgemäßen Werkzeughälfte 10 wird das zweite Hubelement 94, an dem die Verschlussnadeln 40 montiert sind, über ein zusätzliches Aufspannelement 93 mit den Kupplungselementen 92 der ersten Baueinheit 11 verbunden.

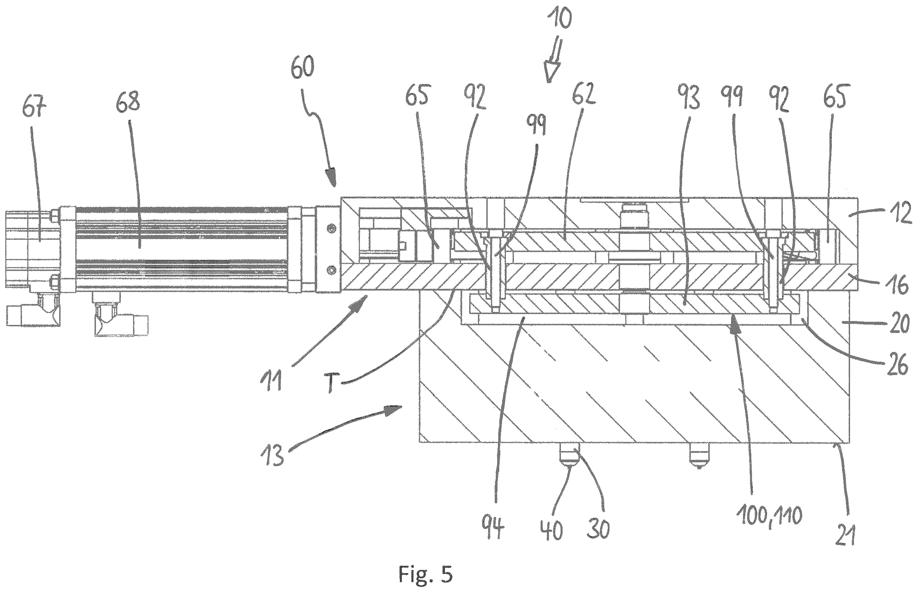

Wie Fig. 5 zeigt, ist das Aufspannelement 93 beispielweise eine flache Platte, die auf die freien Enden 97 der (Kupplungs-)Bolzen 92 aufgesetzt ist. Die Platte 93 ist hierbei vorzugsweise mit (nicht bezeichneten) Sackbohrungen versehen, welche die Bolzen 92 aufnehmen. Schrauben 99, welche die Bolzen 92 durchsetzen fixieren die Platte 93 an den Bolzen 92.

Nach dem Ansetzen der zweiten Baueinheit 11 an die erste Baueinheit 13 wird das zweite Hubelement 94 mittels (nicht gezeigter) Schrauben an der Platte 93 befestigt, so dass die Verschlussnadeln 40 mit dem Verschlussnadelantrieb 60 verbunden sind.

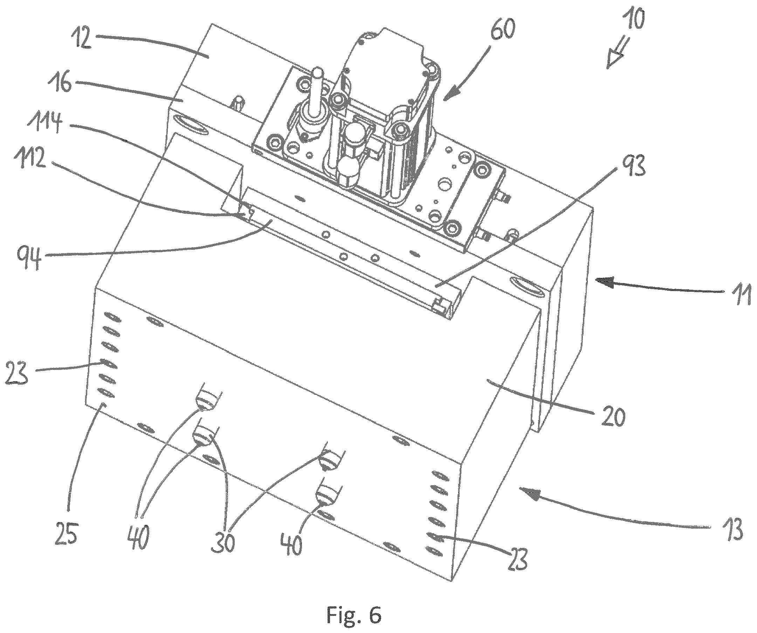

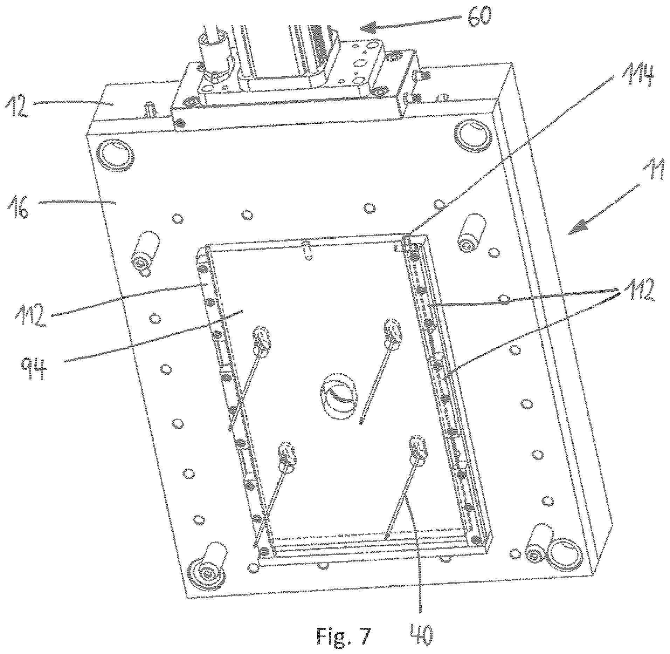

Die Fig. 6 und 7 zeigen dazu eine Alternative. Hier wird das zweite Hubelement 94, namentlich die Platte 94, mit L-förmigen Klemmelementen 112 an dem Aufspannelement 93 fixiert. Die Klemmelemente 112 sind bevorzugt seitlich an der Platte 94 ausgebildet, die hierzu mit einer entsprechenden Stufe 114 versehen ist. Die Klemmelemente 112 können bei Bedarf auch Teile einer Schnellspannvorrichtung 110 sein.

Die Erfindung ist nicht auf eine der vorbeschriebenen Ausführungsformen beschränkt, sondern in vielfältiger Weise abwandelbar. So kann der Verschlussnadelantrieb 60 mehrere Stellglieder 62 aufweisen, die über einen Antriebsmotor 67 gemeinsam betätigt werden. Jedes Stellglied 62 kann aber auch mit einem eigenen Antrieb versehen sein, wobei die Steuerung der einzelnen Antriebe über ein gemeinsames Steuergerät erfolgt. Entsprechend der Anzahl an Stellgliedern 62 können auch innerhalb der zweiten Baueinheit 13 mehrere zweite Kupplungselemente 94 vorgesehen sein, an denen entsprechend der Anzahl an Kavitäten und den geforderten Stichmaßen mehrere Verschlussnadeln 40 montiert sein können. Jedes zweite Kupplungselement 94 kann aber auch nur eine Verschlussnadel 40 tragen und über ein zugeordnetes erstes Kupplungselement 92 mit einem ersten Stellglied 62 verbunden sein.

Die zwischen der Aufspannplatte 12 und der Werkzeugplatte 20 vorgesehene Deckplatte 16 ist nicht zwingend notwendig. Man kann die Werkzeugplatte 20 und mithin die zweite Baueinheit auch direkt an der Aufspannplatte 12 festlegen.

Die Verschlussnadeln 40 sind stets an dem zweiten Kupplungselement 94 in Form eines zweiten Hubelements oder einer flachen Platte festgelegt. Dabei ist jede einzelne Verschlussnadel 40 in Längsrichtung L und/oder quer dazu relativ zu dem Kupplungselement 94 justierbar, so dass die Kavitäten allesamt gleichzeitig und präzise geschlossen und geöffnet werden, wenn die Verschlussnadeln 40 über den Verschlussnadelantrieb 60 simultan betätigt werden. Alternativ oder ergänzend können die die Verschlussnadeln 40 auch axialfest und radial schwimmend an dem zweiten Hubelement 94 montiert sein.

Man erkennt, dass eine Werkzeughälfte 10 für ein Formwerkzeug einer Spritzgießmaschine mit einem geschlossenen Heißkanalsystem eine Aufspannplatte 12 zur Festlegung der Werkzeughälfte 10 in der Spritzgießmaschine sowie eine Heißkanaldüse 30 und einen Verteiler 50 hat, die in einer Werkzeugplatte 20 angeordnet sind, um eine fließfähige Masse bei einer vorgegeben Temperatur unter definiertem Druck einem trennbaren Formeinsatz zuzuführen. In den Formplatten des Formeinsatzes sind Kavitäten ausgebildet und jeder Kavität ist wenigstens eine Heißkanaldüse 30 zugeordnet. Jede Heißkanaldüse 30 hat ferner eine Verschlussnadel 40 zum Öffnen und Schließen der Kavitäten, wobei zum Betätigen der Verschlussnadeln 40 an oder in der Aufspannplatte 12 ein Verschlussnadelantrieb 60 ausgebildet ist, der die Nadeln 40 in eine Öffnungsstellung und in eine Schließstellung bringt. Um die Investitionskosten für die Werkzeughälften 10 zu reduzieren und um den Ein- und Ausbau zu vereinfachen, ist erfindungsgemäß vorgesehen, dass die Aufspannplatte 12 und der Verschlussnadelantrieb 60 eine erste Baueinheit 11 bilden, und dass die Werkzeugplatte 20, die wenigstens eine Heißkanaldüse 30, die zugehörigen Verschlussnadeln 40 und der Verteiler 50 eine zweite Baueinheit 13 bilden, die in der Trennebene T lösbar mit der ersten Baueinheit 11 verbindbar ist. Dabei sind die Baueinheiten 11, 13 derart ausgebildet, dass bei einem Ausbau der zweiten Baueinheit 13 aus der Spritzgießmaschine die erste Baueinheit 11 in der Spritzgießmaschine verbleibt, und dass nach dem Verbinden der zweiten Baueinheit 13 mit der ersten Baueinheit 11 jede Verschlussnadel 40 mit dem Verschlussnadelantrieb 60 in Wirkverbindung steht. Für die Verbindung zwischen den Baueinheiten 11, 13 sind Befestigungselemente 22 und eine Kupplungseinrichtung 90 vorgesehen.

**Bezugszeichenliste**

| | | | |
|---|---|---|---|
| L | Längsachse | 67 | Motor |
| R1 | erste Richtung | 68 | Getriebe |
| R2 | zweite Richtung | 69 | Führungsschiene |
| T | Trennebene | 70 | Gleitelement |
| | | 81 | Bohrung |
| 10 | Werkzeughälfte | 82 | Verriegelungsbolzen |
| 11 | erste Baueinheit | 83 | freies Ende |
| 12 | Aufspannplatte | 84 | Ende |
| 13 | zweite Baueinheit | 85 | Leiste |
| 16 | Deckplatte | 86 | Führungsbolzen |
| 17 | Führungsbohrung | 87 | Handhabe / Handkurbel |
| 20 | Werkzeugplatte | 88 | Gewindebuchse |
| 21 | Frontfläche | 89 | Schaft |
| 22 | Befestigungselement | 90 | Kupplungseinrichtung |
| 23 | Durchgangsbohrung | 92 | erstes Kupplungselement / Bolzen |
| 24 | Bohrung | 93 | Aufspannelement |
| 25 | Rückseite | 94 | zweites Kupplungselement / zweites Hubelement / Platte |
| 26 | Ausnehmung | 95 | Durchgangsöffnung |
| 27 | Öffnung | 96 | Durchgangsbohrung |
| 30 | Heißkanaldüse | 97 | freies Ende |
| 40 | Verschlussnadel | 98 | Aufnahmebohrung |
| 50 | Verteiler | 99 | Schraube |
| 60 | Verschlussnadelantrieb | 100 | Riegelvorrichtung |
| 61 | Steuerschiene | 110 | Schnellspannvorrichtung |
| 62 | Stellglied / erstes Hubelement / Platte | 112 | Klemmelement |
| 63 | Nut | 114 | Stufe |
| 64 | Gleitelement | | |
| 65 | Anschlag | | |

## Patentansprüche

1. Werkzeughälfte (10) für ein Formwerkzeug einer Spritzgießmaschine mit einem Heißkanalsystem,
▪ mit einer Aufspannplatte (12) zur Festlegung der Werkzeughälfte (10) in der Spritzgießmaschine,
▪ mit einer Heißkanaldüse (30) und einem Verteiler (50), die in einer Werkzeugplatte (20) angeordnet sind, um eine fließfähige Masse bei einer vorgegebenen Temperatur unter definiertem Druck einem trennbaren Formeinsatz zuzuführen, wobei in den Formplatten des Formeinsatzes Kavitäten ausgebildet sind und jeder Kavität wenigstens eine Heißkanaldüse (30) zugeordnet ist,
▪ mit einer Verschlussnadel (40) für jede Heißkanaldüse (30) zum Öffnen und Schließen der Kavitäten, und
▪ mit einem an oder in der Aufspannplatte (12) ausgebildeten Verschlussnadelantrieb (60), zum Betätigen der Verschlussnadeln (40), wobei diese in eine Öffnungsstellung und in eine Schließstellung bringbar sind,
wobei die Aufspannplatte (12) und der Verschlussnadelantrieb (60) eine erste Baueinheit (11) bilden, und wobei die Werkzeugplatte (20), die wenigstens eine Heißkanaldüse (30), die zugehörigen Verschlussnadeln (40) und der Verteiler (50) eine zweite Baueinheit (13) bilden, die lösbar mit der ersten Baueinheit (11) verbindbar ist, wobei jede Verschlussnadel (40) der zweiten Baueinheit (13) mittels einer Kupplungseinrichtung (90) lösbar mit dem Verschlussnadelantrieb (60) der ersten Baueinheit (11) verbindbar ist, wobei die Kupplungseinrichtung (90) ein erstes Kupplungselement (92) aufweist, das der ersten Baueinheit (11) zugeordnet ist, und die Kupplungseinrichtung (90) ein zweites Kupplungselement (94) aufweist, das der zweiten Baueinheit (13) zugeordnet ist, wobei das erste Kupplungselement (92) und das zweite Kupplungselement (94) lösbar miteinander verbindbar sind,
wobei zwischen dem ersten Kupplungselement (92) und dem zweiten Kupplungselement (94) eine Riegelvorrichtung (100) und/oder eine Schnellspannvorrichtung (110) ausgebildet ist.

2. Werkzeughälfte nach Anspruch 1, **dadurch gekennzeichnet, dass** die Baueinheiten (11, 13) derart ausgebildet sind, dass bei einem Ausbau der zweiten Baueinheit (13) aus der Spritzgießmaschine die erste Baueinheit (11) in der Spritzgießmaschine verbleibt, und dass nach dem Verbinden der zweiten Baueinheit (13) mit der ersten Baueinheit (11) jede Verschlussnadel (40) mit dem Verschlussnadelantrieb (60) in Wirkverbindung steht.

3. Werkzeughälfte nach Anspruch 1 oder 2, **dadurch gekennzeichnet, dass** die Werkzeugplatte (20) der zweiten Baueinheit (13) mittels Befestigungselementen (22) lösbar an der Aufspannplatte (12) und/oder einer Deckplatte (16) der ersten Baueinheit (11) festlegbar ist.

4. Werkzeughälfte nach einem der vorhergehenden Ansprüche, **dadurch gekennzeichnet, dass** das erste Kupplungselement (92) ein Bolzen ist, der sich in Längsrichtung (L) der Verschlussnadeln (40) erstreckt, und der die Deckplatte (16) der ersten Baueinheit (11) längsverschieblich durchragt.

5. Werkzeughälfte nach einem der vorhergehenden Ansprüche, **dadurch gekennzeichnet, dass** das erste Kupplungselement (92) vorgelagert zur Deckplatte (16) ein Aufspannelement (93) trägt.

6. Werkzeughälfte nach einem der vorhergehenden Ansprüche, **dadurch gekennzeichnet, dass** das erste Kupplungselement (92) mit einem Stellglied (62) des Verschlussnadelantriebs (60) fest verbunden ist.

7. Werkzeughälfte nach Anspruch 6, **dadurch gekennzeichnet, dass** das Stellglied (62) des Verschlussnadelantriebs (60) ein erstes Hubelement ist, das zur Betätigung der Verschlussnadeln (40) in deren Längsrichtung (L) Stellbewegungen ausführt, um die Verschlussnadeln (40) in die Öffnungsstellung und in die Schließstellung zu bringen.

8. Werkzeughälfte nach einem der vorhergehenden Ansprüche, **dadurch gekennzeichnet, dass** das zweite Kupplungselement (94) ein zweites Hubelement ist, an dem die wenigstens eine Verschlussnadel (40) festgelegt ist.

9. Werkzeughälfte nach Anspruch 8, **dadurch gekennzeichnet, dass** das zweite Hubelement (94) innerhalb der zweiten Baueinheit (13) und in Längsrichtung (L) der Verschlussnadeln (40) verschieblich gelagert ist.

10. Werkzeughälfte nach Anspruch 8 oder 9 in Kombination mit Anspruch 4 oder 5, **dadurch gekennzeichnet, dass** das zweite Hubelement (94) an dem Bolzen (92) und/oder dem Aufspannelement (93) festlegbar ist.

11. Werkzeughälfte nach einem der vorhergehenden Ansprüche, **dadurch gekennzeichnet, dass** die Riegelvorrichtung (100) in dem zweiten Kupplungselement (94) ausgebildet ist.

## Claims

1. Mould half (10) for a moulding tool of an injection moulding machine with a hot runner system,
▪ with a clamping plate (12) for fixing the mould half (10) in the injection moulding machine,
▪ with a hot runner nozzle (30) and a distributor (50) arranged in a die plate (20) for supplying a flowable mass at a predetermined temperature under defined pressure to a separable mould insert, wherein cavities are formed in the mould plates of the mould insert and each cavity is associated with at least one hot runner nozzle (30),
▪ with a shut-off needle (40) for each hot runner nozzle (30) for opening and closing the cavities, and
▪ with a shut-off needle drive (60) formed on or in the clamping plate (12), for actuating the shut-off needles (40), wherein these can be brought into an open position and into a closed position,
wherein the clamping plate (12) and the shut-off needle drive (60) form a first assembly (11), and the die plate (20), the at least one hot runner nozzle (30), the associated closure needles (40) and the distributor (50) forming a second assembly (13) which is detachable from the first assembly (11),
wherein each closure needle (40) of the second assembly (13) by means of a coupling device (90) is detachable from the shut-off needle drive (60) of the first assembly (11), wherein the coupling device (90) has a first coupling element (92), which is associated with the first assembly (11), and the coupling device (90) has a second coupling element (94) associated with the second assembly (13), wherein the first coupling element (92) and the second coupling element (94) are releasably connectable to each other, wherein between the first coupling element (92) and the second coupling element (94) a locking device (100) and/or a quick-release device (110) is formed.

2. Mould half according to claim 1, **characterized in that** the assemblies (11, 13) are designed such that upon removal of the second assembly (13) from the injection moulding machine, the first assembly (11) remains in the injection moulding machine, and that after connecting the second assembly (13) with the first assembly (11) each shut-off needle (40) remains in operative connection with the shut-off needle drive (60).

3. Mould half according to claim 1 or 2, **characterized in that** the die plate (20) of the second assembly (13) by means of fastening elements (22) can be releasably connected to the clamping plate (12) and/or a cover plate (16) of the first assembly (11).

4. Mould half according to one of the preceding claims, **characterized in that** the first coupling element (92) is a bolt which extends in the longitudinal direction (L) of the shut-off needles (40), and which protrudes in a longitudinally displaceable manner through the cover plate (16) of the first assembly (11).

5. Mould half according to one of the preceding claims, **characterized in that** the first coupling element (92) in front of the cover plate (16) carries a clamping element (93).

6. Mould half according to one of the preceding claims, **characterized in that** the first coupling element (92) is firmly connected to an actuator (62) of the shut-off needle drive (60).

7. Mould half according to claim 6, **characterized in that** the actuator (62) of the shut-off needle drive (60) is a primary lifting element, which performs positioning movements for moving the shut-off needles (40) in their longitudinal direction (L) in order to bring the shut-off needles (40) into the open position and the closed position.

8. Mould half according to one of the preceding claims, **characterized in that** the second coupling element (94) is a second lifting element on which at least one shut-off needle (40) is fixed.

9. Mould half according to claim 8, **characterized in that** the second lifting element (94) within the second assembly (13) is displaceably mounted in the longitudinal direction (L) of the shut-off needles (40).

10. Mould half according to claim 8 or 9 in combination with claim 4 or 5, **characterized in that** the second lifting element (94) can be fixed on the bolt (92) and/or the clamping element (93).

11. Mould half according to one of the preceding claims, **characterized in that** the locking device (100) is arranged in the second coupling element (94).

## Revendications

1. Moitié d'outil (10) pour un outil de moulage d'une machine de moulage par injection avec un système de canaux chauffants,
- avec une plaque de serrage (12) pour la fixation de la moitié d'outil (10) dans la machine de moulage par injection,
- avec une buse de canaux chauffants (30) et un distributeur (50) qui sont disposés dans une plaque d'outil (20) afin d'amener une masse coulante à une température prescrite sous pression définie à un insert de moule séparable, dans laquelle des cavités sont réalisées dans les plaques de moule de l'insert de moule et à chaque cavité est associée au moins une buse de canaux chauffants (30),
- avec une aiguille de fermeture (40) pour chaque buse de canaux chauffants (30) pour l'ouverture et la fermeture des cavités, et
- avec un entraînement d'aiguille de fermeture (60) réalisé sur ou dans la plaque de serrage (12), pour l'actionnement des aiguilles de fermeture (40), dans laquelle celles-ci peuvent être amenées dans une position d'ouverture et dans une position de fermeture, dans laquelle la plaque de serrage (12) et l'entraînement d'aiguille de fermeture (60) forment une première unité modulaire (11), et dans laquelle la plaque d'outil (20), l'au moins une buse de canaux chauffants (30), les aiguilles de fermeture (40) afférentes et le distributeur (50) forment une seconde unité modulaire (13) qui peut être reliée de manière amovible à la première unité modulaire (11), dans laquelle chaque aiguille de fermeture (40) de la seconde unité modulaire (13) peut être raccordée au moyen d'un dispositif de couplage (90) de manière amovible à l'entraînement d'aiguille de fermeture (60) de la première unité modulaire (11), dans laquelle le dispositif de couplage (90) présente un premier élément de couplage (92) qui est associé à la première unité modulaire (11), et le dispositif de couplage (90) présente un second élément de couplage (94) qui est associé à la seconde unité modulaire (13), dans laquelle le premier élément de couplage (92) et le second élément de couplage (94) peuvent être raccordés de manière amovible l'un à l'autre,
dans laquelle un dispositif de verrou (100) et/ou un dispositif à serrage rapide (110) est réalisé entre le premier élément de couplage (92) et le second élément de couplage (94).

2. Moitié d'outil selon la revendication 1, **caractérisée en ce que** les unités modulaires (11, 13) sont réalisées de telle manière que pour un démontage de la seconde unité modulaire (13) de la machine de moulage par injection la première unité modulaire (11) reste dans la machine de moulage par injection, et qu'après le raccordement de la seconde unité modulaire (13) à la première unité modulaire (11), chaque aiguille de fermeture (40) est en liaison active avec l'entraînement d'aiguille de fermeture (60).

3. Moitié d'outil selon la revendication 1 ou 2, **caractérisée en ce que** la plaque d'outil (20) de la seconde unité modulaire (13) peut être fixée au moyen d'éléments de fixation (22) de manière amovible à la plaque de serrage (12) et/ou une plaque de recouvrement (16) de la première unité modulaire (11).

4. Moitié d'outil selon l'une quelconque des revendications précédentes, **caractérisée en ce que** le premier élément de couplage (92) est un boulon qui s'étend dans le sens longitudinal (L) des aiguilles de fermeture (40), et qui traverse la plaque de recouvrement (16) de la première unité modulaire (11) de manière mobile longitudinalement.

5. Moitié d'outil selon l'une quelconque des revendications précédentes, **caractérisée en ce que** le premier élément de couplage (92) porte devant la plaque de recouvrement (16) un élément de serrage (93).

6. Moitié d'outil selon l'une quelconque des revendications précédentes, **caractérisée en ce que** le premier élément de couplage (92) est raccordé fixement à un organe de réglage (62) de l'entraînement d'aiguille de fermeture (60).

7. Moitié d'outil selon la revendication 6, **caractérisée en ce que** l'organe de réglage (62) de l'entraînement d'aiguille de fermeture (60) est un premier élément de levage qui réalise pour l'actionnement des aiguilles de fermeture (40) dans leur sens longitudinal (L) des mouvements de réglage afin d'amener les aiguilles de fermeture (40) dans la position d'ouverture et dans la position de fermeture.

8. Moitié d'outil selon l'une quelconque des revendications précédentes, **caractérisée en ce que** le second élément de couplage (94) est un second élément de levage auquel l'au moins une aiguille de fermeture (40) est fixée.

9. Moitié d'outil selon la revendication 8, **caractérisée en ce que** le second élément de couplage (94) est logé de manière mobile dans la seconde unité modulaire (13) et dans le sens longitudinal (L) des aiguilles de fermeture (40).

10. Moitié d'outil selon la revendication 8 ou 9 en combinaison avec la revendication 4 ou 5, **caractérisée en ce que** le second élément de couplage (94) peut être fixé au boulon (92) et/ou à l'élément de serrage (93).

11. Moitié d'outil selon l'une quelconque des revendications précédentes, **caractérisée en ce que** le dispositif de verrou (100) est réalisé dans le second élément de couplage (94).
